# EUROPEAN PATENT SPECIFICATION

(11) **EP 3 470 660 B1**
(45) Date of publication and mention of the grant of the patent: **20.04.2022**
(21) Application number: 17196151.9
(22) Date of filing: 12.10.2017
(51) Int. Cl.: B23K 35/30, B23K 35/02, F02M 55/02, F02M 55/00, F02M 61/16

(54) **BRAZED ARTICLE, FUEL RAIL ASSEMBLY AND METHODS FOR PRODUCING THE SAME**
HARTGELÖTETER ARTIKEL, BRENNSTOFFSCHIENENANORDNUNG UND VERFAHREN ZUR HERSTELLUNG DAVON
ARTICLE BRASÉ, ENSEMBLE RAMPE DE CARBURANT ET LEURS PROCÉDÉS DE PRODUCTION

(43) Date of publication of application: 17.04.2019
(73) Proprietor: Vitesco Technologies GmbH, 93055 Regensburg (DE)
(72) Inventor: Serra, Giandomenico, 56010 Ghezzano - S.Giuliano Terme (PI) (IT); Giovannetti, Massimo, 50018 Scandicci (IT); Di Domizio, Gisella, 56017 San Giuliano Terme (IT); Weigl, Georg, 93049 Regensburg (DE)
(74) Representative: Vitesco Technologies

(56) References cited:
- DE-A1-102004 037 787
- DE-A1-102008 035 494
- US-A1- 2009 144 959

## Description

The present disclosure relates to a brazed article and to a method for producing a brazed article, particularly but not exclusively for components of a fuel rail assembly for internal combustion engines. According to one aspect, the present disclosure therefore relates to a fuel rail assembly and to a method for producing the fuel rail assembly, the fuel rail assembly in particular comprising or representing the brazed article.

Producing brazed joints to connect two components comprises applying a brazing filler material to the components, bringing the two components together with the filler material therebetween and subjecting the components with the brazing filler material to heat in a furnace for melting the brazing filler material. The quality of the brazed joint is dependent upon the filler material extending over the entire intended area as it melts in the furnace, and there is a risk that the brazing is incomplete or there is no brazing in certain areas, which may be due to insufficient heat transfer to the filler material or to failure of the filler material to extend over the entire intended area.

DE 10 2004 037 787 A1 discloses a fuel supply with a feed line including branch pipes on one side. Each pipe includes connecting consoles to which sleeves including fixing holes are connected by hard soldering. Blind holes and diagonal bores are provided in the consoles. The walls penetrate a centering spigot in a longitudinal direction to connect the blind holes with an inner space of the line for transferring fuel from the line to an injector. Further, a method for producing a fuel rail assembly is disclosed which shows applying a brazing filler material to the fuel rail and the second component, and melting the brazing filler material so as to distribute the filler material over the first and second joining areas thereby brazing the fuel rail and the second component together.

US 2009/0144959A1 discloses a method for assembling a direct injection fuel rail of an internal combustion engine which includes the steps of: designing a fuel distribution tube with a first radius, mating a fuel rail component with a second radius that is different from the first radius with the fuel distribution tube, forming at least one projection point where the fuel rail component contacts the fuel distribution tube, consuming the projection point during resistance winding process, and forming a temporary bond between the fuel rail component and the fuel distribution tube.

DE 10 2008 035 494 A1 shows a rail assembly for fuel injection system of an internal combustion engine for motor vehicle with distance elements resting against pipe under formation of gap between contact surface and pipe, where soldered joint is filled in gap. The assembly has multiple junctions for fasting the assembly to an internal combustion engine. The junctions fluidically connect a supply pipe with a fuel injector. Each junction has a contact surface that is fastened to the pipe via a soldered point. Distance elements are arranged and protrude from the contact surface. The distance elements rest against the pipe under formation of a gap between the contact surface and the pipe. The soldered joint is filled in the gap.

The present disclosure seeks to provide a brazed article with a reliable brazed joint and particularly to a method for producing such a brazed article.

The disclosure is particularly but not exclusively applicable for brazing together components of a fuel rail assembly for internal combustion engines. Fuel rail assemblies operate in a harsh environment with high temperatures, high pressures and vibrations and in order to ensure reliability and durability the components for such assemblies, when brazed together, have the required degree of reliability and durability for operating in this harsh environment.

According to the present disclosure there is provided a brazed article comprising a first component and a second component and a brazed joint therebetween to secure the first and second components together by means of a brazing filler material distributed between a first joining area formed by a surface portion of the first component and second joining area formed by a surface portion of the second component, wherein one or both of the joining areas have formed therein at least one elongate slot adapted to contain a brazing material.

Two or more second components may be secured to the first component by respective brazed joints, whereby one or both of the joining areas comprise at least one elongate slot adapted to contain a brazing material.

In one particular embodiment, the brazed article is a fuel rail assembly and the first component is a fuel rail. The second component may be secured to an outer surface of the fuel rail by the brazed joint. The second component may be a fuel adapter for connecting the fuel rail with a fuel injector, for example. The brazed joint may be formed between a base of the fuel adapter and the outer surface of the fuel rail. The second component may also be a fixing bracket, for example for fixing the fuel rail to an internal combustion engine.

The slot or slots preferably extend across substantially the entire breadth of the joining area or areas. The breadth is the dimension of the respective joining area in direction along an elongation direction of the fuel rail in one embodiment. It is also conceivable that the slot or slots extend across substantially the entire height of the joining area or areas, the height being the dimension of the joining area along an intersection line of the joining area with a plane perpendicular to the elongation direction of the fuel rail.

In a preferred arrangement, two spaced elongate slots are provided, each being adapted to contain a brazing material. Each of the slots may be a slot according to one of the above-mentioned embodiments and developments. In one development, the slots are mutually parallel. This shall include embodiments in which the slots are curved. In this case, the planes spanned by each of the slots are preferably parallel. The slots may be congruent in top view on these planes in one development.

According to the invention, the slot or slots extend across the entire extent of the adjoining area so as to be visually exposed at the edges of the joining area.

The brazing material may be in the form of a wire or a brazing paste. When the brazing material is in the form of a wire, the wire is located in the associated slot with an interference fit along its entire length. In another embodiment, the interference fit extends over only part of the slot; in this case, the wire may be in loose fit with the other part or parts of the slot. This interference fit enables the brazing material to be fastened to the joining area in the desired position by a mechanical connection that does not require any additional fixing means, such as adhesive. This simplifies handling of the components before brazing to produce the brazed joint that secures the two components together. The slots and the interference fit with wire may be used to braze substantially flat surfaces or curved surfaces or arcuate surfaces together rather than tubular surfaces, i.e. pipe-in-pipe overlapping joints.

The present disclosure is particularly advantageous when the joining area of the brazed joint has one dimension greater than another, in which case, the slot or slots preferably extend in the direction of the greater dimension. This arrangement has the advantage of facilitating that the brazing material extends over the entire joining area of the brazed joint. To facilitate the uniform spreading of the brazing material, when two or more slots are provided, the two or more slots are preferably in spaced parallel relationship.

In yet another embodiment, the slots are discontinuous along the overall length of the slots to assist in the melting brazing material extending over the joining area in a more uniform manner.

In a further embodiment, to facilitate the uniform spreading of the brazing material during the melting stage, the brazing material is discontinuous along the overall length of the slots. In an alternative embodiment, the depth and width of the slot is varied along its length.

In yet another embodiment, the greatest depth and/or width of the slots is in the mid-region of the slot.

Preferably, the brazing material is in the form of a copper wire or a copper-based brazing material in the form of a wire.

In some embodiments, an outer surface of first component comprises a profile surface providing the first joining area and the second component comprises a surface shaped to provide an exterior face to match the profile surface, the exterior face providing the second joining area. The brazed joint is arranged between the profile surface and the exterior face. The profile surface and the exterior face may be arcuate. In some embodiments, the profile surface comprises a convex surface and the exterior face comprises a concave surface.

The present disclosure also illustrates a fuel rail assembly for a fuel injection for an internal combustion engine, comprising a fuel rail having an elongate body forming a reservoir for fuel, and a plurality of fuel outlet ports, and including a brazed article according the disclosure, the first component of the brazed article comprising the fuel rail. The second component may comprise a fuel adapter secured to an outlet port of the fuel rail, the fuel adapter providing a hydraulic communication between the fuel rail and a fuel injector for injecting fuel into the internal combustion engine, or the second component may comprise a fixing bracket for mounting the fuel rail to an internal combustion engine.

In some embodiments, an outer surface of the fuel rail comprises a profile surface providing the first joining area and the fuel adapter or the fixing bracket comprises a surface shaped to provide an exterior face to match the profile surface, the exterior face providing the second joining area, wherein the brazed joint is arranged between the profile surface and the exterior face.

The profile surface and the exterior face may be arcuate. The profile surface may comprise a convex surface, for example a portion of the outer surface of a tubular fuel rail, for example a cylindrical fuel rail, and the exterior face of the fuel adapter or fixing bracket comprises a concave surface that is shaped to match with the profile surface. The exterior surface may be substantially elliptical.

The disclosure also illustrates a method for producing a brazed article formed of two components, as disclosed above, the method comprising applying a brazing filler material to the first component and/or the second component, and melting the brazing filler material so as to distribute the filler material over the first and second joining areas thereby brazing the two components together.

A method for producing a fuel rail assembly is also disclosed. The first component for the brazed article is a fuel rail. The method comprises applying a brazing filler material to the fuel rail and/or the second component, and melting the brazing filler material so as to distribute the filler material over the first and second joining areas thereby brazing the two components together. The second component may be a fuel adapter or a fixing bracket for example and be brazed to the outer surface of the fuel rail.

The two components including the brazing filler material may be placed in a furnace to melt the filler material and form the brazed joint.

In this method, the brazing filler material is in the form of a wire located in each of the slots, the wire melting to spread across the joining area when the two components and the filler material are heated in a furnace. The wire is a copper wire or copper-based wire. The brazing filler material may also be applied to the first and/or second joining area in the form of a paste.

In some embodiments, in which the brazing material is in the form of a wire, the wire is located in the associated slot with an interference fit. The interference fit may extends over only part of the slot or over substantially the entire slot.

In an embodiment, the method may be used to manufacture a fuel rail assembly, whereby the first component of the brazed article comprises the fuel rail and the second component comprises a fuel adapter secured to an outlet port of the fuel rail, the fuel adapter providing a hydraulic communication between the fuel rail and a fuel injector for injecting fuel into the internal combustion engine. In an embodiment, the method may be used to manufacture a fuel rail assembly, whereby the first component of the brazed article comprises the fuel rail and the second component comprises a fixing bracket for mounting the fuel rail to an internal combustion engine.

An outer surface of the fuel rail may comprise a profile surface providing the first joining area and the fuel adapter or fixing bracket comprises a surface shaped to provide an exterior face to match the profile surface, the exterior face providing the second joining area. The brazed joint is arranged between the profile surface and the exterior face. The profile surface and the exterior face may comprise arcuate surfaces. The profile surface may comprise a convex surface and the exterior face may comprise a concave surface.

Further advantages, advantageous embodiments and developments of the brazed article, in particular the fuel assembly, and methods for producing the same will become apparent from the exemplary embodiments which are described below with reference to the accompanying informal drawings, in which:-
Figure 1A shows a side view of a schematic view of part of a fuel rail assembly,
Figure 1B shows a plan view of Figure 1,
Figure 1C shows a sectional view along the line A-A of Figure 1A,
Figure 1D shows a perspective view of the fuel rail assembly of Figure 1A,
Figures 2A - 2C show alternative examples of the present disclosure. And
Figure 3 shows an embodiment with only one slot.

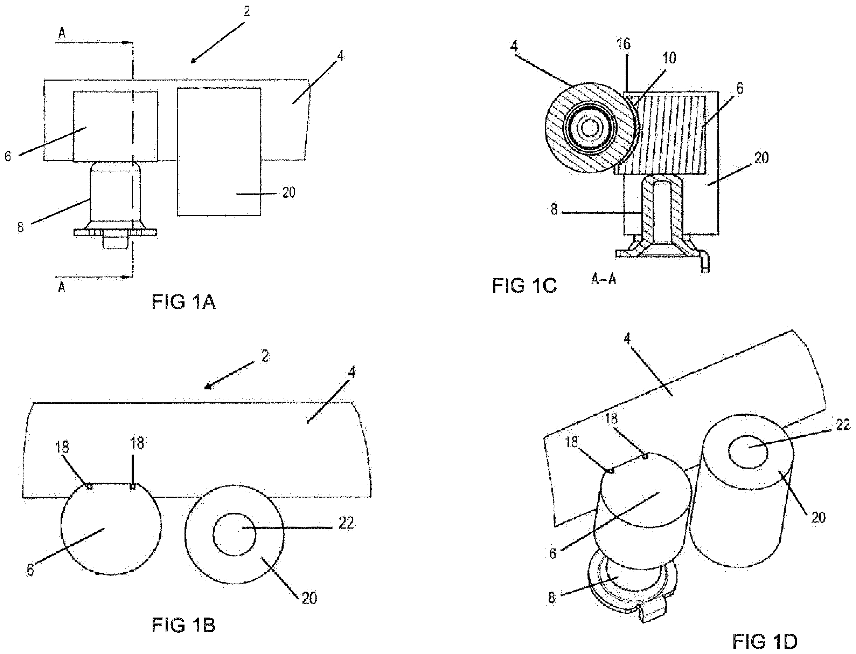

Referring now to Figure 1A, there is shown a schematic view of part of a fuel rail assembly of a fuel injection system for an internal combustion engine. The fuel rail assembly 2 has a fuel rail 4 in the form of an elongate substantially tubular body which comprises a reservoir for fuel. Fuel is supplied to the fuel rail 4 through a fuel inlet by a fuel pump (not shown) . The fuel rail 4 has a plurality of fuel outlets although only one is illustrated for the sake of simplification. The fuel outlet has connected thereto a fuel adapter 6 which provides a hydraulic communication between the fuel rail 4 and a fuel injector cup 8 which has an open lower end 12 in which is located a fuel inlet of a fuel injector (not shown).

The fuel injector 6 is shaped to abut the exterior of the fuel rail 4 as shown in Figure 1C which illustrates a cross section along the line A-A of Figure 1A. In this embodiment, the fuel rail is a tubular body and the fuel adapter 6 has an arcuate joining surface 10 which abuts the fuel rail 4 over a fuel outlet to complete the hydraulic communication between the reservoir in the fuel rail 4 and the fuel injector cup 8. In this way the two joining surfaces mate so that the brazing material between the two surfaces has a uniform thickness across the joining surfaces. In certain embodiments, the mating surfaces may be flat to achieve the desired braze qualities.

The fuel injector 6 is brazed to the fuel rail 4 and a brazing filler material is positioned in between the arcuate joining surface 10 and the surface of the fuel rail 4. The brazing filler material is provided in the form of copper wire which is located in two spaced parallel slots 14 formed in the arcuate surface 10. The ends 18 of the slots extend to the outer edge of the fuel adapter so that the ends 18 of the slots 16 are visible. This facilitates visual checking of the effectiveness of the brazing step.

However, the arrangement is not limited to two spaced parallel slots and is not limited to arcuate joining surfaces and arcuate brazed joints. For example, the joining surface may be substantially planar and more than two slots may be provided and the two or more slots may have arrangements other than parallel. For example two slots may extend at an incline angle to one another or perpendicularly to one another.

As shown in Figures 1A-1D, a mounting bracket 20, shown schematically, is secured to the fuel rail 4, the mounting bracket 20 serving to enable the fuel rail assembly to be secured to an engine. The mounting bracket 20 is provided with a through bore 22 through which the fuel rail assembly can be bolted to the engine. The mounting bracket 20 can be brazed to the fuel rail 4 in the same manner described with reference to the fuel adapter 6.

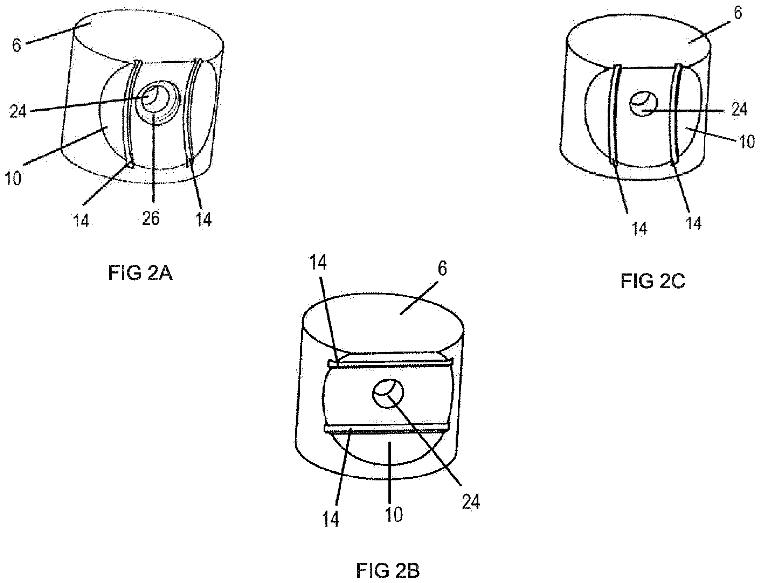

Referring now to Figures 2A to 2C there is shown alternative arrangements of distributing the slots 14 in the arcuate joining surface 10 of the fuel adapter 6. In this view, part of the fuel passage 24 leading from the fuel rail 4 to the fuel injector cup 8 is illustrated. In Figure 2A, the two slots 14 lie in a radial plane of the fuel rail 4 on either side of the fuel passage 24. In addition, in this embodiment, a further ring of brazing material surrounds the periphery of the fuel passage 24.

Figure 2B illustrates an alternative embodiment in which the slots 14 extend along the longitudinal length of the fuel rail 4. Figure 2C illustrates an embodiment similar to that of Figure 2A, without the additional ring 26 of brazing material.

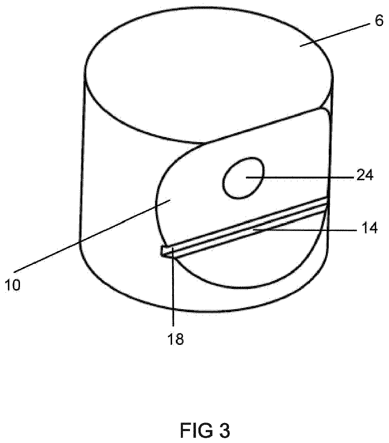

Figure 3 illustrates an embodiment in which only one slot 14 is provided. This arrangement would be particularly advantageous in a situation where the brazing area is elongate, with an elongate dimension substantially greater than its dimension at right angles to the elongate dimension.

The size, that is the depth and width of the slots 14, may be selected depending on the parameters required for the installation and both the width and depth may vary along the length of the slots 14. The positioning of the slots 14 will also depend on the precise size and shape of the joining area. If the joining area has one dimension larger than the other, it is preferable for the elongate slots to extend along the length of the larger dimension. The copper wire is preferably fitted in the slots with an interference fit to prevent inadvertent movement or loss of the copper wire prior to the brazing step. This interference fit may be throughout the length of the slots but may equally be in just certain spots.

Although shown as two straight slots arranged in spaced parallel relationship, in certain installations it is possible that the slots may not be parallel and it is possible that they may also be curved. Also, it is possible that more than two slots may be provided and the slots may be of different lengths. The precise number and orientation of the slots and their depth and width may vary depending on the particular requirements of an application. In the embodiments shown, the slots are machined in the components, but it is possible that they may be obtained by different technologies such as, deforming by pressing or the like, casting or forging.

The embodiments described use a copper wire as the brazing material but it will be appreciated that other materials may be used as the brazing material wire, such as a copper-based alloy, for example a copper-zinc alloy or silver, nickel, palladium, gold, tin, antimony, or lead-based alloys or alloys containing one or more of these elements.

## Claims

1. A fuel rail assembly comprising a fuel rail (4) and a second component (6) and a brazed joint therebetween to secure the fuel rail (4) and the second component (6) together by means of a brazing filler material distributed between a first joining area formed by a surface portion of the fuel rail (4) and second joining area formed by a surface portion of the second component (6), **characterized in that** one or both of the joining areas have formed therein at least one elongate slot (14) adapted to contain a brazing material, wherein the slot (14) extends across the entire extent of the joining area so as to be visually exposed at the edges of the joining area.

2. A fuel rail assembly according to any one of the preceding claims, wherein the joining area of the brazed joint has one dimension greater than another, the slot (14) extending in the direction of the greater dimension.

3. A fuel rail assembly according to any one of the preceding claims, wherein the depth and width of the slot (14) is varied along its length.

4. A fuel rail assembly according to any one of the preceding claims, wherein at least two spaced slots (14) are provided.

5. A fuel rail assembly according to the preceding claim, wherein the two slots (14) are in spaced parallel relationship.

6. A fuel rail assembly for a fuel injection for an internal combustion engine, according to any one of the preceding claims, wherein the second component (6) comprises a fuel adapter secured to an outlet port of the fuel rail (4), the fuel adapter (6) providing a fluidic communication between the fuel rail (2) and a fuel injector for injecting fuel into the internal combustion engine, and/or the second component (6) comprises a fixing bracket for mounting the fuel rail (4) to an internal combustion engine.

7. A method for producing a fuel rail assembly according to any one of the preceding claims, the method comprising:
applying a brazing filler material to the fuel rail (4) and/or the second component (6), and
melting the brazing filler material so as to distribute the filler material over the first and second joining areas thereby brazing the fuel rail (4) and the second component (6) together, wherein the brazing material is in the form of a copper wire.

8. A method according to claim 7, wherein the fuel rail (4) and the second component (6) and the brazing filler material are placed in a furnace to melt the brazing filler material and produce the brazed joint.

9. A method according to claim 7 or claim 8, wherein the brazing filler material is in the form of a wire located in the or each of the slots (14), the wire melting to spread across the joining area when the fuel rail (4) and the second component (6) and the filler material are positioned in the furnace.

10. A method according to any one of claims to 9, wherein the brazing material is in the form of a wire and the wire is located in the associated slot (14) with an interference fit.

11. A method according to claim 10, wherein the interference fit extends over only part of the slot (14).

12. A method according to any one of claims 7 to 11, wherein the second component (6) comprises a fuel adapter secured to an outlet port of the fuel rail (4), the fuel adapter (6) providing a hydraulic communication between the fuel rail (4) and a fuel injector for injecting fuel into the internal combustion engine, or the second component (6) comprises a fixing bracket for mounting the fuel rail (2) to an internal combustion engine.

## Patentansprüche

1. Kraftstoffverteileranordnung, umfassend einen Kraftstoffverteiler (4) und eine zweite Komponente (6) und eine Lötverbindung dazwischen zum Befestigen des Kraftstoffverteilers (4) und der zweiten Komponente (6) miteinander mittels eines Lötfüllmaterials, das zwischen einem ersten Verbindungsbereich, der durch einen Oberflächenabschnitt des Kraftstoffverteilers (4) ausgebildet ist, und einem zweiten Verbindungsbereich, der durch einen Oberflächenabschnitt der zweiten Komponente (6) ausgebildet ist, verteilt ist, **dadurch gekennzeichnet, dass**
in einem oder beiden der Verbindungsbereiche mindestens ein länglicher Schlitz (14) ausgebildet ist, der dazu ausgelegt ist, ein Lötmaterial zu enthalten, wobei sich der Schlitz (14) über die gesamte Erstreckung des Verbindungsbereichs derart erstreckt, dass er an den Rändern des Verbindungsbereichs sichtbar freigelegt ist.

2. Kraftstoffverteileranordnung nach einem der vorhergehenden Ansprüche, wobei der Verbindungsbereich der Lötverbindung eine Abmessung aufweist, die größer als eine andere ist, wobei sich der Schlitz (14) in der Richtung der größeren Abmessung erstreckt.

3. Kraftstoffverteileranordnung nach einem der vorhergehenden Ansprüche, wobei die Tiefe und Breite des Schlitzes (14) entlang seiner Länge variiert.

4. Kraftstoffverteileranordnung nach einem der vorhergehenden Ansprüche, wobei mindestens zwei beabstandete Schlitze (14) bereitgestellt sind.

5. Kraftstoffverteileranordnung nach dem vorhergehenden Anspruch, wobei die zwei Schlitze (14) in einer beabstandeten parallelen Beziehung stehen.

6. Kraftstoffverteileranordnung für eine Kraftstoffeinspritzung für eine Brennkraftmaschine nach einem der vorhergehenden Ansprüche, wobei die zweite Komponente (6) einen Kraftstoffadapter umfasst, der an einer Auslassöffnung des Kraftstoffverteilers (4) befestigt ist, wobei der Kraftstoffadapter (6) eine strömungstechnische Verbindung zwischen dem Kraftstoffverteiler (2) und einer Kraftstoffeinspritzdüse zum Einspritzen von Kraftstoff in die Brennkraftmaschine bereitstellt, und/oder wobei die zweite Komponente (6) einen Montagebügel zum Anbringen des Kraftstoffverteilers (4) an einer Brennkraftmaschine umfasst.

7. Verfahren zum Herstellen einer Kraftstoffverteileranordnung nach einem der vorhergehenden Ansprüche, wobei das Verfahren umfasst:
Aufbringen eines Lötfüllmaterials auf den Kraftstoffverteiler (4) und/oder die zweite Komponente 6), und
Schmelzen des Lötfüllmaterials, um das Füllmaterial über die ersten und zweiten Verbindungsbereiche zu verteilen, wodurch der Kraftstoffverteiler (4) und die zweite Komponente (6) miteinander verlötet werden, wobei das Lötmaterial in der Form eines Kupferdrahts ist.

8. Verfahren nach Anspruch 7, wobei der Kraftstoffverteiler (4) und die zweite Komponente (6) und das Lötfüllmaterial in einen Ofen platziert werden, um das Lötfüllmaterial zu schmelzen und die Lötverbindung herzustellen.

9. Verfahren nach Anspruch 7 oder Anspruch 8, wobei das Lötfüllmaterial in der Form eines Drahts ist, der in dem oder jedem der Schlitze (14) angeordnet ist, wobei der Draht schmilzt, um sich über den Verbindungsbereich zu verteilen, wenn der Kraftstoffverteiler (4) und die zweite Komponente (6) und das Füllmaterial in dem Ofen platziert werden.

10. Verfahren nach einem der Ansprüche 7 bis 9, wobei das Lötmaterial in der Form eines Drahts ist und der Draht in dem zugehörigen Schlitz (14) mit einer Übermaßpassung angeordnet ist.

11. Verfahren nach Anspruch 10, wobei sich die Übermaßpassung über nur einen Teil des Schlitzes (14) erstreckt.

12. Verfahren nach einem der Ansprüche 7 bis 11, wobei die zweite Komponente (6) einen Kraftstoffadapter umfasst, der an einer Auslassöffnung des Kraftstoffverteilers (4) befestigt ist, wobei der Kraftstoffadapter (6) eine hydraulische Verbindung zwischen dem Kraftstoffverteiler (4) und einer Kraftstoffeinspritzdüse zum Einspritzen von Kraftstoff in die Brennkraftmaschine bereitstellt, oder wobei die zweite Komponente (6) einen Montagebügel zum Anbringen des Kraftstoffverteilers (2) an einer Brennkraftmaschine umfasst.

## Revendications

1. Ensemble rampe de carburant, comprenant une rampe de carburant (4) et un deuxième composant (6) et un joint brasé placé entre eux pour solidariser ensemble la rampe de carburant (4) et le deuxième composant (6) au moyen d'un matériau d'apport de brasage réparti entre une première zone de jonction formée par une partie de surface de la rampe de carburant (4) et une deuxième zone de jonction formée par une partie de surface du deuxième composant (6), **caractérisé en ce que** l'une et/ou l'autre des zones de jonction sont pourvues d'au moins une fente allongée (14) adaptée à contenir un matériau de brasage, la fente (14) s'étendant sur toute l'étendue de la zone de jonction de manière à être apparente au niveau des bords de la zone de jonction.

2. Ensemble rampe de carburant selon l'une quelconque des revendications précédentes, dans lequel la zone de jonction du joint brasé possède une dimension plus grande qu'une autre, la fente (14) s'étendant dans la direction de la plus grande dimension.

3. Ensemble rampe de carburant selon l'une quelconque des revendications précédentes, dans lequel la profondeur et la largeur de la fente (14) varient sur sa longueur.

4. Ensemble rampe de carburant selon l'une quelconque des revendications précédentes, dans lequel au moins deux fentes (14) espacées sont ménagées.

5. Ensemble rampe de carburant selon la revendication précédente, dans lequel les deux fentes (14) sont en relation parallèle espacée.

6. Ensemble rampe de carburant pour une injection de carburant pour un moteur à combustion interne, selon l'une quelconque des revendications précédentes, dans lequel le deuxième composant (6) comprend un adaptateur de carburant solidarisé à un orifice de sortie de la rampe de carburant (4), l'adaptateur de carburant (6) assurant une communication fluidique entre la rampe de carburant (2) et un injecteur de carburant pour l'injection de carburant dans le moteur à combustion interne, et/ou le deuxième composant (6) comprend un support de fixation pour le montage de la rampe de carburant (4) sur un moteur à combustion interne.

7. Procédé de production d'un ensemble rampe de carburant selon l'une quelconque des revendications précédentes, le procédé comprenant :
l'application d'un matériau d'apport de brasage sur la rampe de carburant (4) et/ou le deuxième composant (6), et
la fusion du matériau d'apport de brasage de manière à répartir le matériau d'apport sur les première et deuxième zones de jonction pour ainsi braser ensemble la rampe de carburant (4) et le deuxième composant (6), le matériau de brasage prenant la forme d'un fil de cuivre.

8. Procédé selon la revendication 7, dans lequel la rampe de carburant (4) et le deuxième composant (6) et le matériau d'apport de brasage sont placés dans un four pour faire fondre le matériau d'apport de brasage et produire le joint brasé.

9. Procédé selon la revendication 7 ou la revendication 8, dans lequel le matériau d'apport de brasage prend la forme d'un fil positionné dans la ou chacune des fentes (14), le fil fondant pour s'étaler de part en part de la zone de jonction lorsque la rampe de carburant (4) et le deuxième composant (6) et le matériau d'apport sont disposés dans le four.

10. Procédé selon l'une quelconque des revendications 7 à 9, dans lequel le matériau de brasage prend la forme d'un fil et le fil est positionné dans la fente (14) associée avec un ajustement serré.

11. Procédé selon la revendication 10, dans lequel l'ajustement serré s'étend sur une partie uniquement de la fente (14).

12. Procédé selon l'une quelconque des revendications 7 à 11, dans lequel le deuxième composant (6) comprend un adaptateur de carburant solidarisé à un orifice de sortie de la rampe de carburant (4), l'adaptateur de carburant (6) assurant une communication hydraulique entre la rampe de carburant (2) et un injecteur de carburant pour l'injection de carburant dans le moteur à combustion interne, et/ou le deuxième composant (6) comprend un support de fixation pour le montage de la rampe de carburant (4) sur un moteur à combustion interne.
